(19) Europäisches Patentamt
European Patent Office
Office européen des brevets

(11) EP 0 725 084 B1

(12) **EUROPÄISCHE PATENTSCHRIFT**

(45) Veröffentlichungstag und Bekanntmachung des Hinweises auf die Patenterteilung:
**28.10.1998 Patentblatt 1998/44**

(51) Int Cl.[6]: **C08F 2/00**, B01J 19/00, C08F 20/00, C08F 2/10

(21) Anmeldenummer: **96100873.7**

(22) Anmeldetag: **23.01.1996**

(54) **Verfahren zur Herstellung von hochmolekularen Polymerisaten**

Process for preparing high molecular weight polymers

Procédé pour la préparation des polymères à haut poids moléculaire

(84) Benannte Vertragsstaaten:
**BE DE ES FR GB IT**

(30) Priorität: **31.01.1995 DE 19502939**

(43) Veröffentlichungstag der Anmeldung:
**07.08.1996 Patentblatt 1996/32**

(73) Patentinhaber: **BASF Aktiengesellschaft**
**67063 Ludwigshafen (DE)**

(72) Erfinder:
- **Hähnle, Hans-Joachim, Dr.**
  **D-67069 Ludwigshafen (DE)**
- **Neufeld, Eckhard**
  **D-67117 Limburgerhof (DE)**
- **Schornick, Gunnar, Dr.**
  **D-67271 Neuleiningen (DE)**
- **Minges, Roland, Dr.**
  **D-67269 Grünstadt (DE)**
- **Anstock, Thomas, Dr.**
  **D-67256 Weisenheim (DE)**
- **Tropsch, Jürgen, Dr.**
  **D-67354 Römerberg (DE)**
- **Krauss, Hans-Jürgen**
  **D-68159 Mannheim (DE)**

(56) Entgegenhaltungen:
**EP-A- 0 101 893** **DD-B- 119 354**
**DE-B- 1 218 157**

- **PATENT ABSTRACTS OF JAPAN, unexamined applications, C Field, Band 17, Nr. 367, 12. July 1993 THE PATENT OFFICE JAPANESE GOVERNMENT Seite 16 C 1082; & JP-A-05 057 181 (SANYO CHEM IND LTD)**

Bemerkungen:
Die Akte enthält technische Angaben, die nach dem Eingang der Anmeldung eingereicht wurden und die nicht in dieser Patentschrift enthalten sind.

EP 0 725 084 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Die Erfindung betrifft ein Verfahren zur Herstellung von hochmolekularen Polymerisaten durch Polymerisation von wasserlöslichen, monoethylenisch ungesättigten Monomeren und gegebenenfalls Vernetzern, die mindestens zwei nicht konjugierte, ethylenisch ungesättigte Doppelbindungen im Molekül enthalten, sowie gegebenenfalls wasserunlöslichen monoethylenisch ungesättigten Monomeren in wäßriger Lösung in Gegenwart von Polymerisationsinitiatoren in einem rohrförmigen Reaktor und Entfernen des gelartigen Reaktionsgemisches aus dem Reaktor durch Aufpressen eines Inertgases.

Aus der DE-B-12 18 157 ist ein Verfahren zur Herstellung wasserlöslicher Polymerisate durch Polymerisieren von wasserlöslichen, monoethylenisch ungesättigten Monomeren in wäßriger Lösung in Gegenwart von Polymerisationsinitiatoren in einem zylinderförmigen Reaktor bekannt, der mit verschließbaren Anschlüssen versehen ist. Die Polymerisation erfolgt diskontinuierlich. Das entstehende gelförmige Reaktionsgemisch wird mit Hilfe eines längs der Zylinderachse beweglichen eingepaßten Kolbens aus dem zylinderförmigen Reaktor ausgetragen.

Aus der JP-A-93/57181 ist ebenfalls ein Rohrreaktor mit einem beweglichen, wandgängigen Kolben zum Ausdrükken der bei der Polymerisation erhältlichen Polymergele bekannt. Der Nachteil solcher mit einem beweglichen Kolben ausgestatteten Rohrreaktoren ist in dem hohen Verschleiß zu sehen, der während des Betriebs durch Reibung zwischen der Innenwand des Reaktors und dem Kolben verursacht wird. Da die Polymerisatgele häufig von klebriger Konsistenz sind, werden in der Regel sehr glatte oder aber haftungsvermindernd beschichtete Wandflächen benötigt, die für den geschilderten Verschleiß besonders anfällig sind. Wie darüber hinaus in der genannten japanischen Anmeldung zum Stand der Technik angegeben ist, war es bekannt, Polymergele aus einem mit Teflon® ausgekleideten Reaktor durch Aufpressen eines Inertgases wie Stickstoff aus dem Reaktor auszutragen. Dabei tritt jedoch das inerte Gas durch einen Spalt, der sich zwischen der Innenwand des Reaktors und dem Gel ausbildet, vorzeitig aus dem Reaktor aus bevor das Polymerisat durch die Auslaßöffnung vollständig gepreßt worden ist. Auf diese Weise ist es daher nicht möglich, das Polymerisat vollständig aus dem Reaktor zu entfernen.

Aus der EP-B-0374 709 ist ein kontinuierliches Verfahren zur Herstellung von flüssigkeitsabsorbierenden, vernetzten, wasserunlöslichen Polymeren durch Polymerisation von wasserlöslichen Monomeren in einem Rohrreaktor in Gegenwart von Polymerisationsinitiatoren in wäßrigem Medium zu Polymerisatgelen bekannt. Bei diesem Verfahren wird zusammen mit der wäßrigen Monomerlösung eine mit dieser Lösung unmischbare Trennflüssigkeit am Reaktoreingang zugeführt, wobei sich die Trennflüssigkeit im Verlauf der Polymerisation selbständig zwischen Reaktorinnenwand und Polymerphase verteilt und die entstandenen Monomeren gemeinsam mit der Trennflüssigkeit am Reaktorausgang ausgetragen werden. Das Polymere kann beispielsweise durch einen Überdruck eines Inertgases aus dem Reaktor entfernt werden. Problematisch bei diesem Verfahren sind auch hier wieder die auftretenden Durchbrüche der Monomermischung durch das gelförmige Polymerisat oder entlang der Grenzfläche zwischen Reaktorwand und Polymerisatgel. Bei einem Durchbruch der Monomermischung durch das Polymerisatgel muß die Polymerisation unterbrochen und die Anlage gereinigt werden. Die Verwendung von Trennmitteln verringert zwar die Zahl der Durchbrüche durch das Gel, ist aber mit dem Nachteil verbunden, daß das Trennmittel im Reaktionsprodukt verbleibt.

Aus der US-A-5,081,215 ist ein Verfahren zur Herstellung von Polyetherketonen bekannt, bei dem die Polykondensation nach einem zweistufigen Prozeß durchgeführt wird, wobei in der zweiten Stufe die Polykondensation vervollständigt und die dabei erhältliche plastische Polymermatrix mit eingeschlossenen Aluminiumchloridpartikel durch Aufpressen eines Inertgases praktisch rückstandsfrei aus dem Rohrreaktor ausgetragen wird.

Der Erfindung liegt die Aufgabe zugrunde, ein verbessertes Verfahren zur Herstellung von hochmolekularen Polymerisaten, die in wäßrigem Medium ein Polymerisatgel bilden, zur Verfügung zu stellen.

Die Aufgabe wird erfindungsgemäß gelöst mit einem Verfahren zur Herstellung von hochmolekularen Polymerisaten durch Polymerisation von wasserlöslichen, monoethylenisch ungesättigten Monomeren und gegebenenfalls Vernetzern, die mindestens zwei nichtkonjugierte, ethylenisch ungesättigte Doppelbindungen im Molekül enthalten, sowie gegebenenfalls wasserunlöslichen monoethylenisch ungesättigten Monomeren in 10 bis 80 gew.-%iger wäßriger Lösung in Gegenwart von 0,01 bis 5 Gew.-%, bezogen auf die zu polymerisierenden Monomeren, an Polymerisationsinitiatoren in einem rohrförmigen Reaktor und Entfernen des gelartigen Reaktionsgemisches aus dem Reaktor durch Aufpressen eines Inertgases, wenn der rohrförmige Reaktor am Ende eine konische Verjüngung aufweist, wobei das Verhältnis des Durchmessers des Reaktors (D1) zum Durchmesser am Ende der konischen Verjüngung des Reaktors (D2) 2:1 bis 25:1 und der Winkel zwischen D1 am Beginn der konischen Verjüngung und der inneren Konuswand >45 und <90° beträgt. Der Winkel zwischen D1 und der inneren Konuswand beträgt vorzugsweise 65 bis 85°.

Die Polymerisation erfolgt in einem Reaktor. Hierbei handelt es sich im wesentlichen um einen Rohrreaktor, der am Ende eine konische Verjüngung aufweist. Vor dem Eintritt der zu polymerisierenden Reaktionsmischung werden die wäßrige Monomerlösung und die Initiatorlösung, die üblicherweise voneinander getrennt hergestellt und dem Reaktor zugeführt werden, gemischt. Hierfür sind alle Vorrichtungen geeignet, die sich für ein schnelles Vermischen von niedrigviskosen Flüssigkeiten eignen, z.B. statische Mischer.

Der Rohrreaktor besteht im wesentlichen aus einem vertikalen Rohr mit kreisförmigem Querschnitt. Die innere

Mantelfläche des Rohrs ist vorzugsweise mit einem gegenüber dem Reaktionsgemisch inerten und antiadhesiven Material ausgekleidet. Hierfür eignet sich beispielsweise Polytetrafluorethylen. Der Rohrkörper hat vorzugsweise ein Verhältnis von Höhe : Durchmesser von 4 bis 40 und insbesondere von 6 bis 15. Die Vorrichtung kann druckdicht verschlossen werden. Am Kopf des Rohrkörpers sind eine oder mehrere Zuführungen für das Reaktionsgemisch sowie für ein Inertgas vorgesehen. In manchen Fällen kann es vorteilhaft sein, zum Auspressen des gelförmigen Polymerisats aus dem Reaktor eine Mischung aus Inertgas und Lösemittel zu verwenden. Das Lösemittel kann beispielsweise durch die Inertgasleitung oder separat davon am Kopf des Reaktors eingebracht werden. Am Kopf des Reaktors ist außerdem eine Zuleitung vorhanden, über die der Druck im Rohrreaktor erniedrigt werden kann. Das untere Ende des Rohrreaktors weist eine konusartige Verjüngung auf. Das Verhältnis des Durchmessers des Reaktors (D1) zum Durchmesser am Ende der konischen Verjüngung des Reaktors (D2) beträgt 2:1 bis 25:1 und liegt vorzugsweise in dem Bereich von 2:1 bis 20:1. Ganz besonders bevorzugt wird ein Verhältnis von D1 : D2 von 3:1 bis 15:1. Die konusartige Verjüngung des Reaktors ist so beschaffen, daß der Winkel $\alpha$ zwischen D1 am Beginn der konischen Verjüngung und der inneren Konuswand >45 und <90°, vorzugsweise 65 bis 85° beträgt. Für die meisten praktischen Anwendungen beträgt der Winkel a 75 bis 85°.

Der Reaktor kann mit einem Mantel umgeben sein, so daß die darin befindliche Reaktonsmischung von außen beheizt oder gekühlt werden kann. Am Ende der konusartigen Verjüngung befindet sich ein Absperrorgan. An das Absperrorgan kann sich ein Auslaufrohr anschließen, das an seinem freien Ende gegebenenfalls eine weitere Verjüngung aufweist, deren Abmessungen auf die Verteilung des auszutragenden Gels optimiert sind. Am Ende des Konus befindet sich eine Einrichtung zur radioaktiven Füllstandsmessung sowie mindestens ein Anschluß durch den zusätzlich Inertgas in den Reaktor eingebracht werden kann. Anstelle einer einzigen Zuleitung kann es von Vorteil sein, wenn am Konusende eine Vielzahl von Öffnungen kreisförmig angeordnet sind. Die aus dem Reaktor ausgetragenen Polymergele werden anschließend in üblicher Weise aufgearbeitet, d.h. kann man sie weiter zerteilen z.B. mit Hilfe eines Abschlagmessers und das zerkleinerte Gel anschließend trocknen. Hierfür eignen sich die üblichen Vorrichtungen wie Taumeltrockner, Schaufeltrockner, Bandtrockner, gerührtes Festbett oder eine Wirbelschicht.

Nach dem erfindungsgemäßen Verfahren erhält man hochmolekulare Polymerisate durch Polymerisation von wasserlöslichen, monoethylenisch ungesättigten Monomeren und gegebenenfalls Vernetzern, die mindestens zwei nichtkonjugierte, ethylenisch ungesättigte Doppelbindungen im Molekül enthalten sowie gegebenenfalls wasserunlöslichen monoethylenisch ungesättigten Monomeren. Wenn man die Polymerisation in Abwesenheit von Vernetzern durchführt, entstehen wasserlösliche Polymerisate. Die Menge an wasserunlöslichen monoethylenisch ungesättigten Monomeren, die gegebenenfalls bei der Polymerisation mitverwendet werden, ist höchstens so groß, daß noch wasserlösliche Copolymerisate resultieren. Die wasserlöslichen monoethylenisch ungesättigten Monomeren werden im folgenden als Monomere der Gruppe (a) bezeichnet. Geeignete Monomere dieser Gruppe sind beispielsweise ethylenisch ungesättigte $C_3$- bis $C_6$-Carbonsäuren, deren Amide und Ester mit Aminoalkoholen der Formel

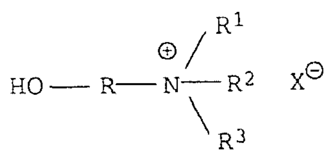

(I),

in der R = $C_2$- bis $C_5$-Alkylen, $R^1$, $R^2$, $R^3$ = H, $CH_3$, $C_2H_5$, $C_3H_7$ und $X^{\ominus}$ ein Anion bedeutet. Geeignet sind außerdem Amide, die sich von Aminen der Formel

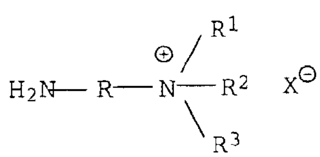

(II),

ableiten. Die Substituenten in Formel II und $X^{\ominus}$ haben die gleiche Bedeutung wie in Formel I.

Bei diesen Verbindungen handelt es sich beispielsweise um Acrylsäure, Methacrylsäure, Crotonsäure, Itaconsäure, Maleinsäure, Fumarsäure, Acrylamid, Methacrylamid, Crotonsäureamid, Dimethylaminoethylacrylat, Diethylaminoethylacrylat, Dimethylaminoneopentylacrylat und Dimethylaminoethylmethacrylat, Dimethylaminopropylacrylat, Dimethylaminoneopentylacrylat und Dimethylaminoneopentylmethacrylat. Die basischen Acrylate und Methacrylate bzw. basischen Amide, die sich von den Verbindungen der Formel II ableiten, werden in Form der Salze mit starken Mineralsäuren, Sulfonsäuren oder Carbonsäuren oder in quaternisierter Form eingesetzt. Das Anion X⊖ für die Verbindungen der Formel I ist der Säurerest der Mineralsäuren bzw. der Carbonsäuren oder Methosulfat, Ethosulfat oder Halogenid aus einem Quaternierungsmittel.

Weitere wasserlösliche Monomere der Gruppe (a) sind N-Vinylpyrrolidon, N-Vinylformamid, Acrylamidopropansulfonsäure, Vinylphosphonsäure und/oder Alkali- bzw. Ammoniumsalze der Vinylsulfonsäure. Die anderen Säuren können ebenfalls entweder in nicht neutralisierter Form oder in partiell bzw. bis zu 100 % neutralisierter Form bei der Polymerisation eingesetzt werden. Als wasserlösliche Monomere der Gruppe (a) eignen sich auch Diallylammoniumverbindungen, wie Dimethyldiallylammoniumchlorid, Diethyldiallylammoniumchlorid oder Diallylpiperidiniumbromid, N-Vinylimidazoliumverbindungen, wie Salze oder Quaternisierungsprodukte von N-Vinylimidazol und 1-Vinyl-2-methylimidazol, und N-Vinylimidazoline, wie N-Vinylimidazolin, 1-Vinyl-2-methylimidazolin, 1-Vinyl-2-ethylimidazolin oder 1-Vinyl-2-n-propylimidazolin, die ebenfalls in quaternisierter Form oder als Salz bei der Polymerisation eingesetzt werden.

Bevorzugte Monomere der Gruppe (a) sind Acrylsäure, Methacrylsäure, Natrium- oder Kaliumacrylat, Natrium- oder Kaliummethacrylat, Acrylamid, Dimethylaminoethylacrylat in quaternierter Form oder als Salz oder Mischungen der Monomeren. Diese Monomeren können in jedem beliebigen Verhältnis miteinander copolymerisiert werden, wobei besonders bevorzugt partiell mit Natronlauge neutralisierte Acrylsäure, Monomergemische aus Acrylamid und Acrylsäure und/oder Natriumacrylat und Monomergemische aus Acrylamid und Dimethylaminoethylacrylatmethochlorid eingesetzt werden.

Um vernetzte Polymerisate herzustellen, die als Superabsorber verwendet werden, polymerisiert man mindestens ein Monomer der Gruppe (a) mit mindestens einem Monomer der Gruppe (b). Als Monomer der Gruppe (b) werden im folgenden Vernetzter bezeichnet, die mindestens zwei nicht konjugierte, ethylenisch-ungesättigte Doppelbindungen aufweisen. Geeignete Vernetzer sind beispielsweise N,N'-Methylen-bisacrylamid, Polyethylenglykoldiacrylate und Polyethylenglykoldimethacrylate die sich jeweils von Polyethlenglykolen eines Molekulargewichts von 126 bis 8500, vorzugsweise 400 bis 2000, ableiten, Trimethylolpropantriacrylat, Trimethylolpropantrimethacrylat, Ethylenglykoldiacrylat, Propylenglykoldiacrylat, Butandioldiacrylat, Hexandioldiacrylat, Hexandioldimethacrylat, Diacrylate und Dimethacrylate von Blockcopolymerisaten aus Ethylenoxid und Propylenoxid, zweifach bzw. dreifach mit Acrylsäure oder Methacrylsäure veresterte mehrwertige Alkohole, wie Glycerin oder Pentaerythrit, Triallylamin, Tetraallylethylendiamin, Divinylbenzol, Diallylphthalat, Polyethylenglykoldivinylether von Polyethylenglykolen eines Molekulargewichts von 126 bis 4000, Trimethylolpropandiallylether, Butandioldivinylether, Pentaerythrittriallylether und/oder Divinylethylenharnstoff. Vorzugsweise setzt man wasserlösliche Vernetzer ein, z.B. N,N'-Methylen-bisacrylamid, Polyethylenglykoldiacrylate, Polyethylenglykoldimethacrylate, Pentaerythrittriallylether und/oder Divinylharnstoff. Die Monomeren der Gruppe (b) werden nur bei der Herstellung von wasserunlöslichen Polymerisaten verwendet, und zwar in Mengen von 0,001 bis 5, vorzugsweise von 0,01 bis 2,0 Gew.-%, bezogen auf die bei der Copolymerisation insgesamt eingesetzten Monomeren.

Die Copolymerisation der Monomeren der Gruppen (a) und (b) kann - sofern eine Änderung der Eigenschaften der vernetzten Copolymerisate gewünscht wird - zusätzlich noch in Gegenwart von wasserunlöslichen, monoethylenisch ungesättigen Monomeren, im folgenden mit Monomere der Gruppe (c) bezeichnet, durchgeführt werden. Monomere der Gruppe (c) sind beispielsweise Hydroxyethylacrylat, Hydroxypropylacrylat, Hydroxyethylmethacrylat, Hydroxypropylmethacrylat, Acrylnitril und/oder Methacrylnitril. Außerdem eignen sich Ester der Acrylsäure oder Methacrylsäure mit einwertigen, 1 bis 18 Kohlenstoffatomen enthaltenden einwertigen Alkoholen, z.B. Methylacrylat, Ethylacrylat, Propylacrylat, Isopropylacrylat, n-Butylacrylat, Isobutylacrylat, Hexylacrylat, 2-Ethylhexylacrylat, Stearylacrylat, die entsprechenden Ester der Methacrylsäure, Fumarsäurediethylester, Maleinsäurediethylester, Maleinsäuredimethylester, Maleinsäuredibutylester, Vinylformiat, Vinylacetat und Vinylpropionat. Sofern die Monomeren der Gruppe (c) zur Modifizierung der wasserlöslichen oder der wasserunlöslichen Polymerisate verwendet werden, setzt man sie in Mengen von 0,5 bis 20, vorzugsweise von 2 bis 10 Gew.-%, bezogen auf die insgesamt zur Polymerisation gelangenden Monomeren ein.

Die Polymerisation kann gegebenenfalls in Gegenwart der üblichen Polymerisationsregler erfolgen. Geeignete Polymerisationsregler sind beispielsweise Thioverbindungen, wie Thioglykolsäure, Mercaptoalkohole, z.B. 2-Mercaptoethanol, Mercaptopropanol und Mercaptobutanol, Dodecylmercaptan, Ameisensäure, Ammoniak und Amine, z.B. Ethanolamin, Diethanolamin, Triethanolamin, Triethylamin, Morpholin und Piperidin.

Die Monomeren (a) und gegebenenfalls (b) und gegebenenfalls (c) werden in 10 bis 80, vorzugsweise 20 bis 60 gew.-%iger wäßriger Lösung in Gegenwart von Polymerisationsinitiatoren polymerisiert. Als Polymerisationsinitiatoren können sämtliche unter den Polymerisationsbedingungen in Radikale zerfallende Verbindungen eingesetzt werden, z.B. Peroxide, Hydroperoxide, Wasserstoffperoxid, Persulfate, Azoverbindungen und die sogenannten Redoxkatalysatoren. Bevorzugt ist der Einsatz von wasserlöslichen Initiatoren. In manchen Fällen ist es vorteilhaft, Mischungen verschiedener Polymerisationsinitiatoren zu verwenden, z.B. Mischungen aus Wasserstoffperoxid und Natrium- oder Kaliumperoxodisulfat. Mischungen aus Wasserstoffperoxid und Natriumperoxodisulfat können in jedem beliebigen Verhältnis verwendet werden. Geeignete organische Peroxide sind beispielsweise Acetylacetonperoxid, Methylethylketonperoxid, tert.-Butylhydroperoxid, Cumolhydroperoxid, tert.-Amylperpivalat, tert.-Butylperpivalat, tert.-Butylperneohexanoat, tert.-Butylperisobutyrat, tert.-Butylper-2-ethylhexanoat, tert.-Butylperisononanoat, tert.-Butylpermaleat, tert.-Butylperbenzoat, tert.-Butylper-3,5,5-tri-methylhexanoat und tert.-Amylperneodekanoat. Besonders geeignete Polymerisationsinitiatoren sind wasserlösliche Azostarter, z.B. 2,2'-Azobis-(2-amidinopropan)dihydrochlorid, 2,2'-Azobis-(N,N'-dimethylen)isobutyramidin-dihydrochlorid, 2-(Carbamoylazo)isobutyronitril, 2,2'-Azobis[2-(2'-imidazolin-2-yl)propan]dihydrochlorid und 4,4'-Azobis-14-cyanovaleriansäure). Die genannten Polymerisationsinitiatoren werden in Mengen von 0,01 bis 5, vorzugsweise 0,1 bis 2,0 Gew.-%, bezogen auf die zu polymerisierenden Monomeren eingesetzt.

Die Redoxkatalysatoren enthalten als oxidierende Komponente mindestens eine der oben angegebenen Perverbindungen und als reduzierende Komponente beispielsweise Ascorbinsäure, Glukose, Sorbose, Ammonium- oder Alkalimetall-hydrogensulfit, -sulfit, -thiosulfat, -hyposulfit, -pyrosulfit oder -sulfid, Metallsalze, wie Eisen-II-ionen oder Silberionen oder Natriumhydroxymethylsulfoxylat. Vorzugsweise verwendet man als reduzierende Komponente des Redoxkatalysators Ascorbinsäure oder Natriumsulfit. Bezogen auf die bei der Polymerisation eingesetzte Menge an Monomeren verwendet man beispielsweise $3 \cdot 10^{-6}$ bis 1 Mol-% der reduzierenden Komponente des Redoxkatalysatorsystems und 0,001 bis 5,0 Mol-% der oxidierenden Komponente des Redoxkatalysators. Anstelle der oxidierenden Komponente des Redoxkatalysators kann man auch einen oder mehrere wasserlösliche Azostarter verwenden.

Bei der Herstellung von wasserlöslichen Polymerisaten, die beispielsweise als Flockungsmittel verwendet werden, erfolgt die Polymerisation der oben beschriebenen Monomeren der Gruppe (a) in Abwesenheit von Monomeren der oben angegebenen Gruppe (b). Die Monomeren der Gruppe (c) können gegebenenfalls zur Modifizierung der wasserlöslichen Polymerisate mitverwendet werden.

Für die Herstellung von wasserabsorbierenden Polymerisaten, d.h. Polymerisaten, die in Wasser unlöslich sind darin aber quellen, polymerisiert man die wasserlöslichen monoethylenisch ungesättigten Monomeren der Gruppe (a) mit 0,001 bis 5,0 Gew.-%, bezogen auf die bei der Polymerisation insgesamt eingesetzten Monomeren, mindestens eines Vernetzers. Die Vernetzer sind oben als Monomere der Gruppe (b) beschrieben. Auch die wasserunlöslichen Polymerisate können gegebenenfalls mit den Monomeren der Gruppe (c) modifiziert werden. Vernetzte Polyacrylsäuren und vernetzte Polyacrylamide sind vor allem als Superabsorber von technischem Interesse.

Für die Herstellung von Flockungsmitteln polymerisiert man besonders bevorzugt partiell mit Natronlauge neutralisierte Acrylsäure, Monomergemische aus Acrylamid und Acrylsäure und/oder Natriumacrylat und Monomergemische aus Acrylamid und Dimethylaminoethylacrylatmethochlorid. Die Monomeren können in jedem beliebigen Verhältnis miteinander copolymerisiert werden. Es ist auch möglich, sie zu Homopolymerisaten zu polymerisieren, z.B. Homopolymerisate aus Acrylamid und Homopolymerisate aus Dimethylaminoethylacrylatmethochlorid.

Die Polymerisation erfolgt jeweils in wäßriger Lösung bzw. in Lösemittelgemischen, die mindestens 50 Gew.-% Wasser enthalten. Geeignete, mit Wasser mischbare Lösemittel sind beispielsweise Glykole wie Ethylenglykol, Propylenglykol und Butylenglykol sowie Polyethylenglykole einer Molmasse bis zu 4000 sowie Methyl- und Ethylether von Glykolen und Polyglykolen.

Bei der Polymerisation der Monomeren der Gruppe (a) allein und gegebenenfalls in Gegenwart der Monomeren (c) werden wasserlösliche Polymere erhalten. Bei der Herstellung von wasserunlöslichen Polymerisaten durch Polymerisieren der Monomeren der Gruppe (a) und der Monomeren der Gruppe (b) und gegebenenfalls der Monomeren der Gruppe (c) in wäßriger Lösung in Gegenwart von Polymerisationsinitiatoren entstehen Polymergele. Die Monomeren und die Initiatoren werden beispielsweise in Rührkesseln in dem zu polymerisierenden wäßrigen Medium gelöst. Die Initiatoren können gegebenenfalls in Form einer Lösung in einem organischen Lösemittel dem Reaktor zugeführt werden. Die Lösung der Monomeren und der Initiatoren wird vorzugsweise auf eine Temperatur in dem Bereich von -20 bis 30°C eingestellt. Um aus der Lösung der Monomeren und der Initiatoren restlichen Sauerstoff zu entfernen, leitet man üblicherweise ein Inertgas durch diese Lösungen. Hierfür eignen sich beispielsweise Stickstoff, Kohlendioxid oder Edelgase wie Neon oder Helium. Die Polymerisation wird in Abwesenheit von Sauerstoff durchgeführt. Die Lösungen der Monomeren und des Initiators werden, bevor sie in den Reaktor gelangen, miteinander gemischt, wobei der Eintrag von Monomeren und Initiator in den Rohrreaktor vorzugsweise im Gegenstrom eines Inertgases erfolgt. Die Polymerisation kann diskontinuierlich und kontinuierlich durchgeführt werden. Bei einer diskontinuierlichen Arbeitsweise füllt man beispielsweise den in der Figur dargestellten Reaktor mit einer wäßrigen Monomerlösung und einer Lösung des Initiators. Sobald die Polymerisation anspringt, erwärmt sich das Reaktionsgemisch je nach den gewählten Ausgangsbedingungen, wie Konzentration der Monomeren in der wäßrigen Lösung und Art der Monomeren. Aufgrund der freigesetzten Polymerisationswärme steigt die Temperatur des Reaktionsgemisches auf beispielsweise 30 bis 180, vorzugsweise 40 bis 130°C an. Die Polymerisation kann bei Normaldruck, unter vermindertem Druck oder auch unter erhöhtem Druck durchgeführt werden. Das Arbeiten unter erhöhtem Druck kann in solchen Fällen von Vorteil sein, wenn das bei der Polymerisation zu erwartende Temperaturmaximum oberhalb der Siedetemperatur des verwendeten Lösemittelgemisches liegt. Andererseits kann es von Vorteil sein, gerade bei der Herstellung von sehr hochmolekularen Produkten die Maximaltemperatur mit Hilfe einer Siedekühlung durch Polymerisieren unter vermindertem Druck zu senken. Der Rohrreaktor ist in den meisten Fällen ummantelt, so daß das Reaktionsgemisch je nach Bedarf gekühlt

oder erhitzt werden kann. Nach Beendigung der Polymerisationsreaktion kann das erhaltene Polymergel beispielsweise rasch gekühlt werden, indem man die Reaktorwand kühlt.

Um das Polymerisatgel aus dem Rohrreaktor auszutragen, preßt man am Kopf des Rohrreaktors ein Inertgas auf das Polymerisatgel und kann dann am Ende des Reaktors nach Öffnen des Absperrorgans das Gel vollständig aus dem Reaktor drücken. Das Polymerisatgel kann gegebenenfalls auch dadurch aus dem Reaktor ausgetragen werden, daß man am Kopf des Rohrreaktors eine inerte Flüssigkeit, die vorzugsweise ein Fällungsmittel für das Polymere ist, einpreßt. Um das gebildete Polymergel aus dem Reaktor auszutragen ist beispielsweise ein Druck von 2 bis 65, vorzugsweise 4 bis 25 bar erforderlich. Die Druckangaben beziehen sich sowohl auf ein Inertgas als auch auf eine inerte Flüssigkeit, die zum Austragen des Polymergels am Kopf des Reaktors eingeführt werden. Aufgrund der Druckerhöhung am Kopf des Reaktors wird das gelartige Produkt in einer Pfropfenströmung aus dem Reaktor ausgetragen. Unter Pfropfenströmung soll hierbei eine Strömung verstanden werden, bei der ein gleichmäßiges Absinken der Oberfläche des Gelpfropfens stattfindet, wobei praktisch keine Deformation der Oberfläche des Gelpfropfens eintritt. Um das Polymerisatgel aus dem Reaktor auszutragen, kann der Druck, mit dem das Gel gefördert wird, in einer oder in mehreren Stufen reduziert werden. In der Figur ist eine Druckreduzierung in einer Stufe schematisch dargestellt. Die Druckreduzierung erfolgt durch geeignete Wahl des Verhältnisses der Durchmesser D1 und D2. Der Förderdruck kann gegebenenfalls in einer weiteren oder in mehreren sich daran anschließenden Druckstufen reduziert werden. In Abhängigkeit von der Zusammensetzung des Polymergels und des zum Auspressen des Gels angewandten Drucks kann das Gel beim Entspannen auf Normaldruck ohne eine mechanische Zerkleinerung in einzelne Teilchen zerfallen. Das aus dem Reaktor kommende Gel kann - wie oben bereits angedeutet - in einer nachfolgenden Aufarbeitungseinheit gegebenenfalls weiter zerkleinert, getrocknet und - falls notwendig - von Restmonomeren befreit werden.

Die Polymerisation erfolgt im diskontinuierlichen Betrieb adiabatisch. Man erhält nach dem erfindungsgemäßen Verfahren hochmolekulare Produkte. Die Molmassen der wasserlöslichen Produkte liegen oberhalb von 100.000 und betragen vorzugsweise $1 \cdot 10^6$ bis $20 \cdot 10^6$. Sie haben K-Werte nach Fikentscher von 180 bis 300 (bestimmt in 5 %-iger wäßriger Kochsalzlösung bei einer Polymerkonzentration von 0,1 Gew.-% und einer Temperatur von 25°C). Für dies vernetzten Polymerisate kann kein K-Wert angegeben werden, weil sich die vernetzten Polymerisate nicht in Wasser oder einem anderen Lösemittel lösen. Eine Molekulargewichtsbestimmung ist für die vernetzten Polymeren nicht möglich.

Die wasserlöslichen Polymerisate werden beispielsweise als Flockungsmittel in industriellen und kommunalen Kläranlagen als Retentionsmittel bei der Herstellung von Papier und als Verdikkungsmittel für wäßrige Systeme verwendet. Die vernetzten Polymerisate haben ein hohes Absorptionsvermögen für Wasser und werden dementsprechend als Superabsorber z.B. in Windeln verwendet.

Die Prozentangaben in den Beispielen bedeuten Gewichtsprozent, sofern sich nichts anderes ergibt. Die K-Werte der Polymerisate wurden nach H. Fikentscher, Zellulose-Chemie, Band 13, 58-64 und 71-74 (1932) bestimmt. Die Messungen wurden in 5 gew.-%iger Kochsalzlösung bei einer Polymerkonzentration von 0,1 Gew.-%, einer Temperatur von 25°C und einem pH-Wert von 7 durchgeführt.

Die Bestimmung der Ladungsdichte wurde nach D. Horn, Polyethylenimine - Physicochemical Properties and Application, (IUPAC) Polymeric Amines and Ammonium Salts, Pergamon Press Oxford and New York, 1980, Seite 333-355 durchgeführt.

Die Aufnahmekapazität des Superabsorbers an Wasser pro Gramm Superabsorber wurde mit Hilfe des Teebeuteltests bestimmt. Als Flüssigkeit dient dabei eine 0,9 %-ige Kochsalzlösung. Eine definierte Menge an gelförmigem, wasserabsorbierenden Copolymerisat (1 g) wird in einen Teebeutel gefüllt, der dann verschlossen wird. Die Abmessungen des Teebeutels müssen der Menge des eingewogenen gelförmigen Copolymerisats entsprechend angepaßt sein. Der Teebeutel wird dann eine bestimmte Zeit lang in die Flüssigkeit eingetaucht und dann nach einer Abtropfdauer von 15 Sekunden zurückgewogen. Für die Berechnung der Absorptionskapazität muß ein Blindversuch durchgeführt werden, bei dem ein Teebeutel ohne gelförmiges, wasserabsorbierendes Copolymerisat in die Lösung eingetaucht wird und das Gewicht des Teebeutels nach der oben angegebenen Abtropfdauer bestimmt wird. Die Aufnahmekapazität ergibt sich dann aus folgender Beziehung

$$\text{Aufnahmekapazität} = \frac{\text{Gewicht des Teebeutels mit Polymerisatgel - Gewicht des Teebeutels im Blindversuch}}{\text{Gewicht des eingewogenen Polymerisatgels}}$$

Die Retention wird folgendermaßen ermittelt: Gleiche Vorgehensweise wie oben, nur wird anstelle des Abtropfens der Teebeutel 3 min bei 1.400 Upm in einer Zentrifuge mit einem Durchmesser von 230 mm geschleudert.

$$\text{Retention} = \frac{\text{Gewicht des Teebeutels nach dem Schleudern - Gewicht des Teebeutels im Blindversuch}}{\text{Gewicht des eingewogenen Polymerisatgels}}$$

Der Auswaschverlust wird dadurch bestimmt, daß man das wasserunlösliche Polymerisat in einer 0,9 gew.-%igen

Kochsalzlösung dispergiert, die Dispersion 16 Stunden rührt, anschließend filtriert und die Menge des extrahierten Anteils im Filtrat titrimetrisch bestimmt.

Beispiele

Beispiel 1

Herstellung eines Superabsorbers

In einem mit 1 bezeichneten Kessel wurde aus 1362,5 g destilliertem Wasser, 8363,5 g (32,92 mol) einer 37 %-igen wäßrigen Natriumacrylat-Lösung, 789,85 g (11,0 mol) Acrylsäure, 19,43 g Trimethylolpropantriacrylat und 64,75 g einer 15 %-igen wäßrigen Natriumperoxodisulfat-Lösung eine wäßrige Lösung hergestellt. Diese Lösung wurde auf 20°C temperiert. Man leitete 20 Minuten lang Stickstoff durch die Lösung und bereitete gleichzeitig in einem zweiten Kessel eine Lösung aus 0,097 g Ascorbinsäure in 499,9 g destilliertem Wasser, temperierte sie ebenfalls auf 20°C und leitete 20 Minuten lang Stickstoff durch die Lösung. Nach Fertigstellung der Lösungen wurde der Inhalt der beiden Kessel unter einem Druck von $2 \cdot 10^5$ Pa (2 bar) im Stickstoffgegenstrom synchron in den Reaktor eingepreßt, wobei beide Lösungen mit Hilfe eines statischen Mischers vor Eintritt in den Reaktor an der in der Figur mit 3 bezeichneten Stelle gemischt wurden.

Der Reaktor hatte eine Länge von 1000 mm, einen Rohrdurchmesser D1 von 160 mm und verjüngte sich am Ende konusartig auf einen Durchmesser D2 von 50 mm. Das Verhältnis D1/D2 betrug 3,2. Die Konuslänge betrug 320 mm, der in der Figur angegebene Winkel $\alpha$ im rechtwinkligen Dreieck zwischen D1 am Beginn der konischen Verjüngung und der inneren Konuswand betrug 80°.

Nach dem Vermischen der beiden oben beschriebenen wäßrigen Lösungen sprang die Polymerisation sofort an. Die Stickstoffspülung des Reaktors wurde abgestellt und der Rohrreaktor verschlossen. Das Reaktionsgemisch erreichte eine Maximaltemperatur von 99°C. Man ließ es über Nacht auf Raumtemperatur abkühlen. Dann preßte man am Kopf des Reaktors über die in der Figur mit 4 bezeichnete Leitung einen Stickstoffdruck von $9 \cdot 10^5$ Pa (9 bar) auf. Nach Öffnen des Absperrventils konnte der gesamte gelartige Reaktorinhalt rückstandsfrei ausgetragen werden, wobei sich das Produkt am Austritt aus einem Austrittsrohr mit einem Durchmesser von 100 mm in ungleichmäßig geformte Gelpartikeln von einigen Zentimeter Durchmesser zerteilte. Das so erhaltene feste zähelastische, kaum klebriges Gel wurde mit einem Schneidmesser weiter zerkleinert und anschließend bei 70°C in einem Trockenschrank bei $2 \cdot 10^3$ Pa (20 mbar) 15 Stunden lang getrocknet. Die Aufnahmekapazität an Wasser betrug 45 g/g Polymerisat, die Retention 33 g Wasser pro g Polymerisat. Der Auswaschverlust lag bei 22 %.

Beispiel 2

Herstellung eines Superabsorbers

Das Beispiel 1 wurde mit der einzigen Ausnahme wiederholt, daß man die Polymerisation unter einem Druck von $8 \cdot 10^5$ Pa (8 bar) durchführte. Die dabei erreichte Maximaltemperatur des Reaktionsgemisches lag bei 95°C. Die Konsistenz des erhaltenen Gels war fest, zähelastisch und kaum klebrig. Das Polymerisatgel konnte unter einem Druck von $9 \cdot 10^5$ Pa (9 bar) rückstandsfrei aus dem Rohrreaktor ausgetragen werden. Die Aufnahmekapazität betrug 46 g Wasser pro g Polymer, die Retention 34 g Wasser pro g Polymer und der Auswaschverlust 26 %.

Beispiel 3

Herstellung eines Superabsorbers

Ausgehend von folgendem Ansatz:

| Kessel 1: | |
|---|---|
| destilliertes Wasser | 807,7 g |
| Natriumacrylat-Lösung 37% in Wasser | 8843,4 g (35,8 mol) |
| Acrylsäure | 857,5 g (11,9 mol) |
| Trimethylolpropantriacrylat | 21,1 g |
| Natriumperoxodisulfat-Lösung 15% in Wasser | 70,3 g |

| Kessel 2: | |
|---|---|
| destilliertes Wasser | 499,9 g |
| Ascorbinsäure | 0,105 g |

polymerisierte man die Mischung wie in Beispiel 2 beschrieben. Die erreichte Maximaltemperatur lag bei 112°C. Die Konsistenz des erhaltenen Gels war fest, zähelastisch und nur noch wenig klebrig. Mit einem Druck von $9 \cdot 10^5$ Pa (9 bar) konnte das Produkt rückstandsfrei ausgetragen werden. Das Polymerisat hatte folgende Eigenschaften:

| | |
|---|---|
| Aufnahmekapazität | 44 g/g |
| Retention | 32 g/g |
| Auswaschverlust | 21 %. |

Beispiel 4

Herstellung eines Superabsorbers

Ausgehend von folgendem Ansatz:

| Kessel 1: | |
|---|---|
| destilliertes Wasser | 118,5 g |
| Natriumacrylat-Lösung 37% in Wasser | 9482,1 g (37,6 mol) |
| Acrylsäure | 903,2 g (12,5 mol) |
| Trimethylolpropantriacrylat | 22,2 g |
| Natriumperoxodisulfat-Lösung 15% in Wasser | 74,0 g |

| Kessel 2: | |
|---|---|
| destilliertes Wasser | 499,9 g |
| Ascorbinsäure | 0,111 g |

polymerisierte man die Mischung wie in Beispiel 2 beschrieben. Die erreichte Maximaltemperatur lag bei 127°C. Die Konsistenz des erhaltenen Gels war fest, zähelastisch und nur noch geringfügig klebrig. Mit einem Druck von $9 \cdot 10^5$ Pa (9 bar) konnte das Produkt rückstandfrei ausgetragen werden. Das Polymerisat hatte folgende Eigenschaften:

| | |
|---|---|
| Aufnahmekapazität | 40 g/g |
| Retention | 27 g/g |
| Auswaschverlust | 17 %. |

Beispiel 5

Herstellung eines Superabsorbers

Ausgehend von folgendem Ansatz:

| Kessel 1: | |
|---|---|
| destilliertes Wasser | 1362,5 g |
| Natriumacrylat-Lösung 37% in Wasser | 8363,5 g (32,9 mol) |
| Acrylsäure | 789,9 g (11,0 mol) |
| Trimethylolpropantriacrylat | 19,4 g |

| Kessel 2: | |
|---|---|
| destilliertes Wasser | 497,66 g |
| 2,2'-Azobis[2-(2'-imidazolin-2-yl)propan]dihydrochlorid | 2,34 g |

polymerisierte man die Mischung wie in Beispiel 1 beschrieben. Die erreichte Maximaltemperatur lag bei 97°C. Die Konsistenz des erhaltenen Gels war fest, zähelastisch und nur geringfügig klebrig.
Es gelang, das Produkt mit einem Überdruck von $9 \cdot 10^5$ Pa (9 bar) rückstandfrei aus dem Rohrreaktor auszupressen.
Das Polymerisat hatte folgende Eigenschaften:

| | |
|---|---|
| Aufnahmekapazität | 44 g/g |
| Retention | 34 g/g |
| Auswaschverlust | 18 %. |

Beispiel 6

Herstellung eines anionischen Flockungsmittels

In den beiden Kesseln 1 und 2 wurden aus den folgenden Bestandteilen Lösungen hergestellt.

| Kessel 1: | |
|---|---|
| destilliertes Wasser | 5454,7 g |
| Acrylamid-Lösung 50% in Wasser | 2304,0 g (16,2 mol) |
| Natriumacrylat-Lösung 37,3% in Wasser | 1737,3 g ( 6,9 mol) |
| 10%ige wäßrige Lösung von Diethylentriaminpentanatriumacetat: | 4,0 g |

| Kessel 2: | |
|---|---|
| destilliertes Wasser | 498,9 g |
| 2,2'-Azobis[2-(2'-imidazolin-2-yl)propan]dihydrochlorid | 1,08 g |

Beide Lösungen wurden auf 25°C temperiert. Man leitete 30 Minuten Stickstoff durch die Lösungen. Anschließend wurde der Inhalt der beiden Kessel mit einem Überdruck von $2 \cdot 10^5$ Pa (2 bar) im Stickstoffgegenstrom synchron in den im Beispiel 1 beschriebenen Rohrreaktor eingepreßt. Nach Einsetzen der exothermen Reaktion wurde die Stickstoffspülung abgestellt und der Rohrreaktor verschlossen. Die Polymerisation sprang innerhalb kurzer Zeit nach dem Mischen an. Das Reaktionsgemisch erreichte eine Maximaltemperatur von 68°C. Über Nacht kühlte es sich auf Raumtemperatur ab. Man erhielt ein festes, zähelastisches, kaum klebriges Gel. An das Absperrorgan am Ausgang des im Beispiel 1 beschriebenen Reaktors schloß sich ein konusartig verjüngtes 150 mm langes, mit Teflon® ausgekleidetes Rohr an, das am Ende einen Innendurchmesser von 10 mm hatte. Das Gel konnte bei Drücken von $4 \cdot 10^5$ bis $8 \cdot 10^5$ Pa (4 bis 8 bar) problemlos durch die Düse mit einer Öffnung von 10 mm ausgepreßt werden. Im Rohrreaktor blieben nach dem Auspressen keine Rückstände zurück. Die erhaltenen Gelstränge wurden zerschnitten und im Vakuumtrockenschrank bei 50°C getrocknet. Das Polymerisat hatte einen K-Wert von 287 und eine Ladungsdichte von 3,2 meq/g.

Beispiel 7

Herstellung eines anionischen Flockungsmittels

Wie im Beispiel 6 beschrieben, wurde von folgendem Ansatz ausgehend ein weiteres hochmolekulares Copolymer aus Acrylamid und Natriumacrylat hergestellt.

| Kessel 1: | |
|---|---|
| destilliertes Wasser | 4273,9 g |
| Acrylamid-Lösung 50% in Wasser | 400,0 g ( 2,8 mol) |

(fortgesetzt)

| Kessel 1: | |
|---|---|
| Natriumacrylat-Lösung 37,3% in Wasser | 4825,7 g ( 19,1 mol) |
| 10 %ige wäßrige Lösung von Diethylentriaminpentanatriumacetat | 0,4 g |

| Kessel 2: | |
|---|---|
| destilliertes Wasser | 498,8 g |
| 2,2'-Azobis [2-(2'-imidazolin-2-yl)propan]dihydrochlorid | 1,2 g |

Die Konsistenz des Gels war weich, zähelastisch, wenig klebrig. An das Absperrorgan am Ausgang des im Beispiel 1 beschriebenen Reaktors schloß sich ein konusartig verjüngtes, mit Teflon® ausgekleidetes Rohr an, das am Ende einen Innendurchmesser von 10 mm hatte. Das Gel konnte mit Drücken zwischen $4 \cdot 10^5$ und $6 \cdot 10^5$ Pa (4 und 6 bar) am Eingang des Reaktors rückstandsfrei durch die Düse mit einer Öffnung von 10 mm ausgepreßt werden. Das Polymerisat hatte einen K-Wert von 244 und eine Ladungsdichte von 9,6 meq/g.

Beispiel 8

Herstellung eines anionischen Flockungsmittels

Wie im Beispiel 6 beschrieben, wurde von folgendem Ansatz ausgehend ein weiteres hochmolekulares Copolymer aus Acrylamid und Natriumacrylat hergestellt. Allerdings wurde nach dem Einpressen der Lösungen in den Rohrreaktor ein Druck von $6 \cdot 10^3$ Pa (60 mbar) eingestellt und während der Polymerisation und der Abkühlphase aufrecht erhalten.

| Kessel 1: | |
|---|---|
| destilliertes Wasser | 1244,2 g |
| Acrylamid-Lösung 50% in Wasser | 364,0 g ( 2,6 mol) |
| Natriumacrylat-Lösung 37,3% in Wasser | 4391,4 g (12,4 mol) |
| 10 %ige wäßrige Lösung von Diethylentriaminpentanatriumacetat | 0,36 g |

| Kessel 2: | |
|---|---|
| destilliertes Wasser | 498,9 g |
| 2,2'-Azobis[2-(2'-imidazolin-2-yl)propan]dihydrochlorid | 1,09 g |

Die Konsistenz des Gels war fester als die des im Beispiel 6 beschriebenen Polymerisats, zähelastisch, wenig klebrig. An das Absperrorgan am Ausgang des im Beispiel 1 beschriebenen Reaktors schloß sich ein konusartig verjüngtes, mit Teflon® ausgekleidetes Rohr an, das am Ende einen Innendurchmesser von 10 mm hatte. Das Gel konnte bei einem Druck von $6 \cdot 10^5$ Pa (6 bar) rückstandsfrei durch die Düse mit einer Öffnung von 10 mm ausgetragen werden. Das Polymerisat hatte einen K-Wert von 244 und eine Ladungsdichte von 9,6 meq/g.

Beispiel 9

Herstellung eines anionischen Flockungsmittels

Wie im Beispiel 8 beschrieben, wurde von folgendem Ansatz ausgehend ein weiteres hochmolekulares Copolymer aus Acrylamid und Natriumacrylat hergestellt.

| Kessel 1: | |
|---|---|
| destilliertes Wasser | 2526,1 g |
| Acrylamid-Lösung 50% in Wasser | 2600,0 g (18,3 mol) |
| Natriumacrylat-Lösung 37,3% in Wasser | 871,3 g ( 3,5 mol) |

(fortgesetzt)

| Kessel 1: | |
|---|---|
| 10 %ige wäßrige Lösung von Diethylentriaminpentanatriumacetat | 2,6 g |

| Kessel 2: | |
|---|---|
| destilliertes Wasser | 499,0 g |
| 2,2'-Azobis[2-(2'-imidazolin-2-yl)propan]dihydrochlorid | 0,98 g |

Die Konsistenz des erhaltenen Gels war fest, zähelastisch und wenig klebrig. An das Absperrorgan am Ausgang des im Beispiel 1 beschriebenen Reaktors schloß sich ein konusartig verjüngtes, mit Teflon® ausgekleidetes Rohr an, das am Ende einen Innendurchmesser von 10 mm hatte. Das Gel konnte bei einem Druck zwischen $6 \cdot 10^5$ und $7 \cdot 10^5$ Pa (6 und 7 bar) rückstandsfrei durch die Düse mit einer Öffnung von 20 mm ausgetragen werden. Das Copolymerisat hatte einen K-Wert von 284 und eine Ladungsdichte von 2,7 meq/g.

Beispiel 10

Herstellung eines nichtionischen Flockungsmittels

Wie im Beispiel 6 beschrieben, wurde von folgendem Ansatz ausgehend ein weiteres hochmolekulares Copolymer aus Acrylamid und Natriumacrylat hergestellt.

| Kessel 1: | |
|---|---|
| destilliertes Wasser | 5835,3 g |
| 50% ige wäßrige Acrylamid-Lösung | 3420,0 g (24,1 mol) |
| 37,3 %ige wäßrige Natriumacrylat-Lösung | 241,3 g ( 0,9 mol) |
| 10%ige wäßrige Lösung von Diethylentriaminpentanatriumacetat | 3,42 g |

| Kessel 2: | |
|---|---|
| destilliertes Wasser | 498,9 g |
| 2,2'-Azobis[2-(2'-imidazolin-2-yl)propan]dihydrochlorid | 1,08 g |

Die Konsistenz des so erhaltenen Gels war fest, zähelastisch und wenig klebrig. An das Absperrorgan am Ausgang des im Beispiel 1 beschriebenen Reaktors schloß sich ein konusartig verjüngtes, mit Teflon® ausgekleidetes Rohr an, das am Ende einen Innendurchmesser von 10 mm hatte. Das Gel konnte durch Aufpressen von $5 \cdot 10^5$ bis $7 \cdot 10^5$ Pa (5 bis 7 bar) Stickstoff am Eingang des Reaktors durch die Leitung rückstandsfrei durch die Düse mit einer Öffnung von 10 mm ausgetragen werden. Das Copolymerisat hatte einen K-Wert von 261.

Beispiel 11

Herstellung eines kationischen Flockungsmittels

Wie im Beispiel 6 beschrieben, wurde von folgendem Ansatz ausgehend ein weiteres hochmolekulares Copolymer aus Acrylamid und 2-Trimethylammoniumethylacrylat-chlorid hergestellt.

| Kessel 1: | |
|---|---|
| destilliertes Wasser | 7050,8 g |
| 50 %ige wäßrige Acrylamid-Lösung | 2797,2 g (19,7 mol) |
| 80 %ige wäßrige Lösung von 2-Trimethyl ammoniumethylacrylat-chlorid | 749,3 g ( 3,1 mol) |
| 10%ige wäßrige Lösung von Diethylentriaminpentanatriumacetat | 2,80 g |

| Kessel 2: | |
|---|---|
| destilliertes Wasser | 498,75 g |
| 2,2'-Azobis[2-(2'-imidazolin-2-yl)propan]dihydrochlorid | 1,25 g |

Die Konsistenz des Gels war noch fest, zähelastisch und leicht klebrig. An das Absperrorgan am Ausgang des im Beispiel 1 beschriebenen Reaktors schloß sich ein konusartig verjüngtes, mit Teflon® ausgekieidetes Rohr an, das am Ende einen Innendurchmesser von 10 mm hatte. Das Gel konnte bei einem Druck von $5 \cdot 10^5$ bis $7 \cdot 10^5$ Pa (5 bis 7 bar) rückstandsfrei durch die 10 mm-Düse ausgepreßt werden. Das Copolymerisat hatte einen K-Wert von 262 und eine Ladungsdichte von 2,1 meq/g.

Beispiel 12

Herstellung eines kationischen Flockungsmittels

Wie im Beispiel 6 beschrieben, wurde von folgendem Ansatz ausgehend ein weiteres hochmolekulares Copolymer aus Acrylamid und 2-Trimethylammoniumethylacrylat-chlorid hergestellt.

| Kessel 1: | |
|---|---|
| destilliertes Wasser | 6418,3 g |
| 50 %ige wäßrige Acrylamid-Lösung: 80 %ige wäßrige Lösung von 2-Trimethyl | 2664,0 g (18,7 mol) |
| ammoniumethylacrylat-chlorid | 1665,0 g ( 6,9 mol) |
| 10%ige wäßrige Lösung von Diethylentriaminpentanatriumacetat | 2,66 g |

| Kessel 2: | |
|---|---|
| destilliertes Wasser | 348,6 g |
| 2,2'-Azobis[2-(2-imidazolin-2-yl)propan]dihydrochlorid | 1,67 g |

Die Konsistenz des Gels war weich, zähelastisch und leicht klebrig. An das Absperrorgan am Ausgang des im Beispiel 1 beschriebenen Reaktors schloß sich ein konusartig verjüngtes, mit Teflon® ausgekleidetes Rohr an, das am Ende einen Innendurchmesser von 10 mm hatte. Das Gel konnte bei einem Druck zwischen $4 \cdot 10^5$ und $7 \cdot 10^5$ Pa (4 und 7 bar) rückstandsfrei durch die Düse mit einer Öffnung von 5 mm ausgetragen werden. Das Copolymerisat hatte einen K-Wert von 255 und eine Ladungsdichte von 2,9 meq/g.

Beispiel 13

Herstellung eines kationischen Flockungsmittels

Wie im Beispiel 6 beschrieben, wurde von folgendem Ansatz ausgehend ein weiteres hochmolekulares Copolymer aus Acrylamid und 2-Trimethylammoniumethylacrylat-chlorid hergestellt. Allerdings wurde der Ansatz 2 Stunden nach Erreichen der Maximaltemperatur bei einer Temperatur von 50°C ausgepreßt.

| Kessel 1: | |
|---|---|
| destilliertes Wasser | 7501,3 g |
| 50 %ige wäßrige Acrylamid-Lösung | 1998,0 g (14,1 mol) |
| 80 %ige wäßrige 2-Trimethylammoniumethylacrylat-chlorid-Lösung | 1248,8 g ( 5,2 mol) |
| 10%ige wäßrige Lösung von Diethylantriaminpantanatriumacetat | 2,0 g |

| Kessel 2: | |
|---|---|
| destilliertes Wasser | 348,75 g |
| 2,2'-Azobis[2-(2'-imidazolin-2-yl)propan]dihydrochlorid | 1,25 g |

Die Konsistenz des Gels war weich, zähelastisch und leicht klebrig. An das Absperrorgan am Ausgang des im Beispiel 1 beschriebenen Reaktors schloß sich ein konusartig verjüngtes, mit Teflon® ausgekleidetes Rohr an, das am Ende einen Innendurchmesser von 5 mm hatte. Das Gel konnte bei einem Druck zwischen $3{\cdot}10^5$ und $6{\cdot}10^5$ Pa (3 und 6 bar) rückstandsfrei durch die Düse mit einer Öffnung von 5 mm ausgetragen werden. Das Copolymerisat hatte einen K-Wert von 253 und eine Ladungsdichte von 3,0 meq/g.

Beispiel 14

Herstellung eines kationischen Flockungsmittels

Wie im Beispiel 6 beschrieben, wurde von folgendem Ansatz ausgehend ein weiteres hochmolekulares Copolymer aus Acrylamid und 2-Trimethylammoniumethylacrylat-chlorid hergestellt.

| Kessel 1: | |
|---|---|
| destilliertes Wasser | 5999,0 g |
| 50 %ige wäßrige Acrylamid-Lösung | 1000,0 g ( 7,0 mol) |
| 80 %ige wäßrige Lösung von 2-Trimethylammoniumethylacrylat-chlorid: | 2500,0 g (10,3 mol) |
| 10%ige wäßrige Lösung von Diethylantriaminpantanatriumacatat | 1,0 g |

| Kessel 2: | |
|---|---|
| destilliertes Wasser | 347,5 g |
| 2,2'-Azobis[2-(2'-imidazolin-2-yl)propan]dihydrochlorid | 2,5 g |

Die Konsistenz des Gels war weich, zähelastisch, klebrig. An das Absperrorgan am Ausgang des im Beispiel 1 beschriebenen Reaktors schloß sich ein konusartig verjüngtes, mit Teflon® ausgekleidetes Rohr an, das am Ende einen Innendurchmesser von 10 mm hatte. Das Gel konnte bei einem Stickstoff-Druck zwischen $3{\cdot}10^5$ und $5{\cdot}10^5$ Pa (3 und 5 bar) am Eingang des Reaktors durch die Düse mit einer Öffnung von 10 mm ausgetragen werden. Im Rohrreaktor blieben nur unwesentliche Rückstände zurück. Das Copolymerisat hatte einen K-Wert von 239 und eine Ladungsdichte von 3,9 meq/g.

## Patentansprüche

1. Verfahren zur Herstellung von hochmolekularen Polymerisaten durch Polymerisation von wasserlöslichen, monoethylenisch ungesättigten Monomeren und gegebenenfalls Vernetzern, die mindestens zwei nicht konjugierte, ethylenisch ungesättigte Doppelbindungen im Molekül enthalten, sowie gegebenenfalls wasserunlöslichen monoethylenisch ungesättigten Monomeren in 10 bis 80 gew.-%iger wäßriger Lösung in Gegenwart von 0,01 bis 5 Gew.-%, bezogen auf die zu polymerisierenden Monomeren, an Polymerisationsinitiatoren in einem rohrförmigen Reaktor und Entfernen des gelartigen Reaktionsgemisches aus dem Reaktor durch Aufpressen eines Inertgases, **dadurch gekennzeichnet**, daß der rohrförmige Reaktor am Ende eine konische Verjüngung aufweist, wobei das Verhältnis des Durchmessers des Reaktors (D1) zum Durchmesser am Ende der konischen Verjüngung des Reaktors (D2) 2 : 1 bis 25 : 1 und der Winkel zwischen D1 am Beginn der konischen Verjüngung und der inneren Konuswand >45 und <90° beträgt.

2. Verfahren nach Anspruch 1, dadurch gekennzeichnet, daß der Winkel zwischen D1 und der inneren Konuswand 65 bis 85° beträgt.

3. Verfahren nach Anspruch 1 oder 2, dadurch gekennzeichnet, daß man als wasserlösliche monoethylenisch ungesättigte Monomere Acrylsäure, Methacrylsäure, Natrium- oder Kaliumacrylat, Natrium- oder Kaliummethacrylat, Acrylamid, Dimethylaminoethylacrylat in quaternisierter Form oder als Salz oder Mischungen der Monomeren einsetzt.

4. Verfahren nach Anspruch 1 oder 2, dadurch gekennzeichnet, daß man die wasserlöslichen monoethylenisch ungesättigten Monomeren mit 0,001 bis 5 Gew.-%, bezogen auf die bei der Polymerisation insgesamt eingesetzten Monomeren, mindestens eines Vernetzers polymerisiert.

5. Verfahren nach einem der Ansprüche 1 bis 4, dadurch gekennzeichnet, daß man als Polymerisationsinitiatoren wasserlösliche Azostarter einsetzt.

## Claims

1. A process for preparing high molecular weight polymers by polymerizing water-soluble, monoethylenically unsaturated monomers and, if desired, crosslinkers which contain at least two nonconjugated, ethylenically unsaturated double bonds in the molecule, and, if desired, water- insoluble monoethylenically unsaturated monomers in from 10 to 80% strength by weight aqueous solution in the presence of from 0.01 to 5% by weight, based on the monomers to be polymerized, of polymerization initiators in a tubular reactor and removing the gelatinous reaction mixture from the reactor by injection of an inert gas, wherein the tubular reactor has a conical taper at the end, the ratio of the diameter of the reactor (D1) to the diameter at the end of the conical taper of the reactor (D2) being from 2:1 to 25:1 and the angle between D1 at the start of the conical taper and the inner cone wall being >45 and <90°.

2. A process as claimed in claim 1, wherein the angle between D1 and the inner cone wall is from 65 to 85°.

3. A process as claimed in claim 1 or 2, wherein the water-soluble monoethylenically unsaturated monomers employed are acrylic acid, methacrylic acid, sodium or potassium acrylate, sodium or potassium methacrylate, acrylamide or dimethylaminoethyl acrylate in quaternized form or as a salt or mixtures of the monomers.

4. A process as claimed in claim 1 or 2, wherein the water-soluble monoethylenically unsaturated monomers are polymerized with from 0.001 to 5% by weight, based on the total monomers employed in the polymerization, of at least one crosslinker.

5. A process as claimed in one of claims 1 to 4, wherein the polymerization initiators employed are water-soluble azo initiators.

## Revendications

1. Procédé de préparation de polymères à haut poids moléculaire par polymérisation de monomères solubles dans l'eau et à insaturation monoéthylénique et éventuellement d'agents réticulants, contenant au moins deux doubles liaisons non conjuguées et à insaturation éthylénique, ainsi que, éventuellement, de monomères non solubles dans l'eau et à insaturation monoéthylénique, en solution aqueuse à 10-80% en poids, en présence de 0,01-5% en poids, par rapport aux monomères à polymériser, d'amorceurs de polymérisation, dans un réacteur tubulaire, suivie de la sortie du réacteur du mélange réactionnel sous forme de gel sous la pression d'un gaz inerte, caractérisé en ce que le réacteur tubulaire présente à son extrémité un rétrécissement conique, le rapport du diamètre du réacteur (D1) au diamètre à l'extrémité du rétrécissement conique du réacteur (D2) valant de 2 : 1 à 25 : 1 et l'angle entre D1 au début du rétrécissement conique et la paroi interne du cône étant > 45 et < 90°.

2. Procédé selon la revendication 1, caractérisé en ce que l'angle entre D1 et la paroi interne du cône vaut de 65 à 85°.

3. Procédé selon la revendication 1 ou 2, caractérisé en ce que l'on utilise comme monomère soluble dans l'eau et à insaturation monoéthylénique, l'acide acrylique, l'acide méthacrylique, l'acrylate de sodium ou de potassium, le méthacrylate de sodium ou de potassium, l'acrylamide, l'acrylate de diméthylaminoéthyle sous forme quaternisée ou comme sel ou un mélange de ces monomères.

4. Procédé selon la revendication 1 ou 2, caractérisé en ce que l'on polymérise les monomères solubles dans l'eau et à insaturation monoéthylénique avec 0,001-5% en poids, par rapport à la totalité des monomères utilisés lors de la polymérisation, d'au moins un agent réticulant.

5. Procédé selon l'une quelconque des revendications 1 à 4, caractérisé en ce que l'on utilise un amorceur azoïque soluble dans l'eau comme amorceur de polymérisation.